# EUROPÄISCHE PATENTANMELDUNG

(11) **EP 3 733 560 A1**
(43) Veröffentlichungstag der Anmeldung: **04.11.2020**
(21) Anmeldenummer: 19171763.6
(22) Anmeldetag: 30.04.2019
(51) Int. Cl.: B65G 1/04, B65G 1/10

(54) **PLATTENLAGER**

(71) Anmelder: IMA Schelling Austria GmbH, 6858 Schwarzach (AT)
(72) Erfinder: Walch, Alexander, 6700 Bludenz (AT)
(74) Vertreter: Fechner, Thomas

(57) **Zusammenfassung**

Plattenlager (1) mit zumindest einem Plattentransporteur (2), welcher zumindest einen in der Horizontalen (11) und in der Vertikalen (12) verfahrbaren Plattenaufnehmer (3) zum Aufnehmen, Transportieren und Ablegen von Platten (4) im Plattenlager (1) aufweist,dadurch gekennzeichnet, dassdas Plattenlager (1) zumindest eine Lageretage (5) mit zumindest zwei Plattformen (6) dieser Lageretage (5) und zumindest einer gemeinsamen Plattformführung (7) dieser Lageretage (5) aufweist, wobei die Plattformen (6) jeweils zumindest einen Lagerplatz (8) zum darauf Lagern von einzelnen und/oder aufeinandergestapelten Platten (4) ausbilden und die Plattformen (6) an der gemeinsamen Plattformführung (7) gemeinsam und auch unabhängig voneinander horizontal verfahrbar gelagert sind, wobei die Plattformführung (7) so groß ausgebildet ist, dass, durch unterschiedliches Positionieren der Plattformen (6) an der Plattformführung (7), an voneinander verschiedenen Positionen seitlich neben den und zwischen den Plattformen (6) Freiräume (9) für ein Hindurchführen des Plattenaufnehmers (3) in einen Bereich des Plattenlagers (1) unterhalb dieser Lageretage (5) ausbildbar sind.

## Beschreibung

Die vorliegende Erfindung betrifft ein Plattenlager mit zumindest einem Plattentransporteur, welcher zumindest einen in der Horizontalen und in der Vertikalen verfahrbaren Plattenaufnehmer zum Aufnehmen, Transportieren und Ablegen von Platten im Plattenlager aufweist.

Darüber hinaus betrifft die Erfindung auch ein Verfahren zum Betrieb eines solchen Plattenlagers.

Bei der Verarbeitung von Platten, insbesondere im industriellen Bereich wie z.B. der Möbelindustrie, werden häufig Plattenlager eingesetzt, um verschiedene Formate und Arten von Platten für einen Bearbeitungsprozess wie z.B. einen Zuschnitt bereitzuhalten und zwischenlagern zu können. Bei den im Plattenlager gelagerten Platten kann es sich dabei um noch nicht zugeschnittene Rohplatten, aber auch um, bei einem vorherigen Bearbeitungsschritt, insbesondere bei einem vorherigen Zuschneiden, entstandene Teilplatten handeln. Die Plattenlager sind mit zumindest einem Plattentransporteur ausgerüstet, welcher einen in der horizontalen und in der vertikalen verfahrbaren Plattenaufnehmer zum Aufnehmen, Transportieren und Ablegen von Platten im Plattenlager aufweist. Als Plattentransporteure werden häufig sogenannte Portalhandling-Geräte eingesetzt.

Das Plattenlager benötigt in der Regel relativ viel Platz, um eine gewünschte Anzahl von Lagerplätzen für die Platten bereitstellen zu können. Beim Stand der Technik sind z.B. aus der EP 3 090 977 B1, Fig. 1 und der DE 10 2011 075 135 A1, Fig. 2 gattungsgemäße Plattenlager bekannt, bei denen die Platten auf, auf dem Boden angeordneten fixen Lagerplätzen aufgestapelt oder einzeln abgelegt werden. Aufgrund des Lagerns der Plattenstapel bzw. der Einzelplatten auf einer Grundfläche werden solche Plattenlager auch häufig als Flächenlager bezeichnet.

Um die im Plattenlager zur Verfügung stehende Grundfläche gut nutzen zu können, werden die Platten beim Stand der Technik in der Regel auf den fixen Lagerplätzen in sortenreinen aber auch chaotisch gebildeten Plattenstapeln gelagert. Sortenrein bedeutet dabei, dass in einem Stapel nur Platten des gleichen Typs und des gleichen Formats gelagert werden. Wird eine Platte dieses Typs und Formats benötigt, so kann der Plattentransporteur mit dem Plattenaufnehmer immer einfach die oberste Platte des Stapels aufnehmen. Es ist somit in diesem Fall nur ein Fahrzyklus des Plattentransporteurs notwendig, um die benötigte Platte an den gewünschten Ort umzulagern. Ein chaotisch gebildeter Stapel bedeutet, dass in dem Stapel mehrere unterschiedliche Typen und/oder Formate von Platten aufeinander gestapelt sind. Wird eine Platte eines bestimmten Typs und Formats benötigt und liegt diese in diesem chaotischen Stapel nicht obenauf, so müssen mit dem Plattentransporteur und seinem Plattenaufnehmer zuerst alle über dieser gewünschten Platte liegenden anderen Platten dieses Stapels umgelagert werden. Erst dann kann die gewünschte bzw. benötigte Platte des bestimmten Typs und Formats vom Plattentransporteur aufgenommen und an den gewünschten Ort umgelagert werden. Es sind in der Regel bei chaotisch gebildeten Stapeln somit mehrere Fahrzyklen des Plattentransporteurs erforderlich, bis die gewünschte bzw. benötigte Platte an den gewünschten Ort umgelagert ist. Die chaotische Bildung von Plattenstapeln ist in der Praxis häufig der Regelfall, da im Plattenlager meist weniger Lagerplätze zur Verfügung stehen, wie Plattentypen und Formate eingelagert werden müssen. Je mehr Platten in chaotischen Stapeln abgelagert werden müssen, umso höher ist der Aufwand, um eine benötigte Platte einer bestimmten Type und eines bestimmten Formats aufnehmen und umlagern zu können.

Aus der AT 519 992 A1 ist eine Vorrichtung zur Zwischenlagerung plattenförmiger Werkstücke bekannt, bei der in einem zentralen Aufnahmemagazin mehrere Ablagefächer etagenartig übereinander angeordnet sind, wobei in jeder Etage nur ein Ablagefach vorgesehen ist, welches auf einander gegenüberliegenden Seiten aus dem Aufnahmemagazin herausgefahren werden kann.

Es ist die Aufgabe der vorliegenden Erfindung, ein Plattenlager der eingangs genannten Art dahingehend zu verbessern, dass Platten unterschiedlicher Typen und Formate im Plattenlager so gelagert werden können, dass sie mit gegenüber dem Stand der Technik reduzierten Verfahraufwand für den Transporteur im Plattenlager aufgenommen, transportiert und abgelegt bzw. umgelagert werden können.

Hierzu schlägt die Erfindung ein Plattenlager gemäß Patentanspruch 1 vor.

Es ist also erfindungsgemäß vorgesehen, dass das Plattenlager zumindest eine Lageretage mit zumindest zwei Plattformen dieser Lageretage und zumindest einer gemeinsamen Plattformführung dieser Lageretage aufweist, wobei die Plattformen jeweils zumindest einen Lagerplatz zum darauf Lagern von einzelnen und/oder aufeinandergestapelten Platten ausbilden und die Plattformen an der gemeinsamen Plattformführung gemeinsam und auch unabhängig voneinander horizontal verfahrbar gelagert sind, wobei die Plattformführung so groß ausgebildet ist, dass, durch unterschiedliches Positionieren der Plattformen an der Plattformführung, an voneinander verschiedenen Positionen seitlich neben den und zwischen den Plattformen Freiräume für ein Hindurchführen des Plattenaufnehmers in einen Bereich des Plattenlagers unterhalb dieser Lageretage ausbildbar sind.

Die Erfindung sieht also vor, im Plattenlager eine oder mehrere Lageretagen zu schaffen, wobei in jeder der Lageretagen zumindest zwei Plattformen entlang einer gemeinsamen Plattformführung gemeinsam aber auch unabhängig voneinander horizontal verfahren werden können. Jede dieser Plattformen stellt jeweils zumindest einen Lagerplatz also einen oder mehrere Lagerplätze zur Verfügung, auf welchen einzelne Platten, aber auch aufeinandergestapelte Platten gelagert werden können. Die an und/oder auch auf den Plattformführungen der jeweiligen Lageretage verschiebbar gelagerten Plattformen können dadurch, dass die Plattformführung entsprechend groß ausgebildet ist, unterschiedlich auf der jeweiligen Plattformführung angeordnet werden. Hierdurch können an voneinander verschiedenen Positionen Freiräume seitlich neben oder zwischen den Plattformen in der jeweiligen Lageretage geschaffen werden. Durch diese Freiräume kann der Plattenaufnehmer des Plattentransporteurs in einen Bereich des Plattenlagers unterhalb dieser jeweiligen Lageretage hindurchgeführt werden oder in anderen Worten hindurchgreifen, um in diesem Bereich unterhalb der jeweiligen Lageretage Platten abzulegen oder von dort aufzunehmen. Im Falle, dass das Plattenlager nur eine erfindungsgemäße Lageretage aufweist, können unter dieser Lageretage fixe, auf dem Boden des Plattenlagers angeordnete Lagerplätze ausgebildet sein. In diesem Fall können die Platten auf den durch die Plattformen dieser Lageretage geschaffenen Lagerplätzen aber auch auf den fixen Lagerplätzen unter der Lageretage gelagert werden. Die Verfahrbarkeit der Plattformen entlang der jeweiligen Plattformführung der Lageretage erlaubt es dabei, den Freiraum zum Durchgriff mittels des Plattenaufnehmers an unterschiedlichen Stellen und damit über unterschiedlichen fixen Lagerplätzen zu schaffen, sodass letztendlich der gesamte Bereich unterhalb der Lageretage für den Plattentransporteur zugänglich und damit zum Ablegen von Platten zur Verfügung steht.

Besonders bevorzugte erfindungsgemäße Plattenlager sehen vor, dass das Plattenlager zwei oder mehr solche Lageretagen aufweist, wobei die Lageretagen übereinander angeordnet sind. Hierdurch können die Platten auf den entsprechenden Lagerplätzen der jeweiligen Plattform der verschiedenen Lageretagen aber, wenn gewünscht, auch darunter auf fixen Lagerplätzen abgelagert werden. Durch entsprechendes Verfahren der Plattformen in den jeweiligen Lageretagen entlang der jeweiligen Plattformführungen können an unterschiedlichsten Positionen Freiräume für das Hindurchführen bzw. -greifen des Plattenaufnehmers des Plattentransporteurs geschaffen werden, sodass alle Etagen, aber auch der Bereich darunter, letztendlich dazu genutzt werden können, Platten zu lagern.

In bevorzugten Ausgestaltungsformen der Erfindung kann also vorgesehen sein, dass das Plattenlager zwei oder mehr Lageretagen mit jeweils zumindest zwei Plattformen der jeweiligen Lageretage und zumindest einer gemeinsamen Plattformführung der jeweiligen Lageretage aufweist, wobei die Plattformen jeweils zumindest einen Lagerplatz zum darauf Lagern von einzelnen und/oder aufeinander gestapelten Platten ausbilden und die Plattformen der jeweiligen Lageretage an der gemeinsamen Plattformführung der jeweiligen Lageretage gemeinsam und auch unabhängig voneinander horizontal verfahrbar gelagert sind, wobei die Plattformführung der jeweiligen Lageretage so groß ausgebildet ist, dass durch unterschiedliches Positionieren der Plattformen der jeweiligen Lageretage an der Plattformführung der jeweiligen Lageretage an voneinander verschiedenen Positionen seitlich neben den und zwischen den Plattformen der jeweiligen Lageretage Freiräume für ein Hindurchführen des Plattenaufnehmers in einen Bereich des Plattenlagers unterhalb der jeweiligen Lageretage ausbildbar sind.

Die Erfindung ermöglicht es also, dass die Anzahl der im Plattenlager zur Verfügung stehenden Lagerplätze für einzelne oder aufeinandergestapelte Platten gegenüber den beim Stand der Technik bekannten Plattenlagern verdoppelt, verdreifacht oder durch entsprechende Anzahl der Lageretagen entsprechend vervielfacht wird, ohne dass die vom Plattenlager benötigte Grundfläche sich dadurch erhöht. Hierdurch können wesentlich mehr Plattentypen und -formate sortenrein auf den Lagerplätzen gelagert werden, oder man muss zumindest nur wenige Platten verschiedener Typen oder Größen übereinander stapeln. Durch all dies wird beim Betrieb des Plattenlagers die Notwendigkeit und die Anzahl von Umlagerungszyklen wesentlich reduziert. Dies erhöht die Leistungsfähigkeit des Plattenlagers markant um ein Vielfaches. Auch erfindungsgemäße Plattenlager können als Flächenlager bezeichnet werden.

Bevorzugt ist jedenfalls, dass im Falle von zwei oder mehr übereinander angeordneten Lageretagen die Plattformen voneinander verschiedener Lageretagen unabhängig voneinander an der jeweiligen Plattformführung der jeweiligen Lageretage horizontal verfahrbar gelagert sind.

Der Plattentransporteur hat, wie oben ausgeführt, einen Plattenaufnehmer mit dem er Platten aufnehmen, transportieren und auch ablegen kann. Geeignete Plattentransporteure sind beim Stand der Technik in unterschiedlichsten Ausgestaltungsformen bekannt. Es kann sich um kranartige Ausgestaltungsformen handeln. Genauso gut sind auch an sich bekannte Roboter mit entsprechenden Roboterarmen, an denen z.B. der Plattenaufnehmer angebracht ist, möglich, um entsprechende Plattentransporteure für das Plattenlager auszugestalten. Bevorzugte Ausgestaltungsformen sehen vor, dass der Plattentransporteur einen Plattenaufnehmerträger aufweist, wobei der Plattenaufnehmer hängend am Plattenaufnehmerträger befestigt ist und zum Aufnehmen und Ablegen der Platten entlang der Vertikalen vom Plattenaufnehmerträger absenkbar und anhebbar ist. Günstigerweise ist dabei vorgesehen, dass der Plattenaufnehmerträger im Fall von nur einer Lageretage über dieser Lageretage und im Falle von mehreren Lageretagen über der obersten Lageretage in einer oder zwei Richtungen entlang der Horizontale hin und her verfahrbar gelagert ist. In seiner ganz nach oben verfahrenen Position ist der Plattenaufnehmer zusammen mit einer daran gegebenenfalls befestigten Platte günstigerweise so weit über der oder der obersten Lageretage angeordnet, dass er in einer oder zwei Richtungen entlang der Horizontalen hin und her verfahrbar ist. Der Plattenaufnehmerträger kann z.B. auf einer Brücke und entlang der Brücke verfahrbar gelagert sein. Die Brücke wiederum kann in Richtung orthogonal zu ihrer Längserstreckung verfahrbar auf ein oder mehr Fahrschienen einer Tragstruktur gelagert sein. In diesen Ausgestaltungsformen ist der Plattenaufnehmerträger dann zusammen mit dem Plattenaufnehmer in zwei zueinander orthogonalen Richtungen in der Horizontalen verfahrbar. Die Bewegung des Plattenaufnehmers in den Richtungen parallel zur Vertikalen erfolgt dann günstigerweise durch Absenken und Anheben des Plattenaufnehmers vom Plattenaufnehmerträger. Solche Plattentransporteure sind für Plattenlager an sich bekannt und werden häufig auch als Portalhandling-Geräte bezeichnet.

Das Befestigen der jeweiligen Platte am Plattenaufnehmer kann durch alle beim Stand der Technik an sich bekannten und für die Anwendung geeigneten Befestigungsmittel erreicht werden. Besonders bevorzugt ist vorgesehen, dass der Plattenaufnehmer die jeweilige Platte zum Aufnehmen von oben mittels zumindest einer Ansaugvorrichtung des Plattenaufnehmers ansaugt. Solche Plattenaufnehmer sind wiederum an sich bekannt und werden u.a. auch als Sauggreifer bezeichnet. Die Plattenaufnehmer können dazu geeignet sein, jeweils eine einzige Platte aufzunehmen und abzulegen. Es ist aber auch denkbar, Plattenaufnehmer wie beim Stand der Technik an sich bekannt, so auszugestalten, dass sie mehrere Platten gleichzeitig aufnehmen und ablegen können.

Der Begriff der Platte wird hier allgemein verwendet. Es kann sich um Platten unterschiedlichster Materialien, Größen, Dicken und Zuschnitte handeln. Insbesondere kann es sich um noch nicht bearbeitete Rohplatten aber auch um bereits bearbeitete, insbesondere zugeschnittene, Platten handeln.

Im Sinne der Energieeffizienz kann das Plattenlager zumindest eine Energierückgewinnungseinrichtung zur Rückgewinnung und Speicherung von Energie beim Abbremsen der Plattformen und/oder des Plattentransporteurs aufweisen. Die möglichen Ausgestaltungsformen einer solchen Energierückgewinnungseinrichtung sind zahlreich und können an die jeweilige Art der zum Einsatz kommenden Antriebe angepasst sein. Verwendet man pneumatische oder hydraulische Antriebe zum Bewegen der Plattformen und/oder zum Bewegen des Plattentransporteurs bzw. seiner Komponenten, so können solche Energierückgewinnungseinrichtungen z.B. in Form von Druckspeichern ausgebildet sein, welche beim Abbremsen der Plattformen und/oder des Plattentransporteurs die Bremsenergie in Form von Druck speichern. Dieser gespeicherte Druck kann dann zum nachfolgenden Beschleunigen der Plattformen und/oder des Plattentransporteurs genutzt werden. Besonders bevorzugte Varianten sehen vor, dass die Plattformen zum Verfahren an der gemeinsamen Plattformführung und/oder der Plattentransporteur elektrisch angetrieben sind und das Plattenlager eine Energierückgewinnungseinrichtung zur Rückgewinnung und Speicherung von elektrischer Energie beim Abbremsen der Plattformen und/oder des Plattentransporteurs aufweist.

Vor allem auch für die Art des Antriebs zum Verfahren der Plattformen an der gemeinsamen Plattformführung gibt es verschiedene Möglichkeiten. Eine erste besteht darin, dass die Plattformen zum Verfahren an der gemeinsamen Plattformführung jeweils mittels eines individuellen, nur dieser jeweiligen Plattform zugeordneten Antriebs angetrieben sind. Die individuellen Antriebe lassen es zu, die Plattformen gemeinsam entlang der Plattform horizontal zu verfahren. Die individuellen Antriebe können aber auch dazu genutzt werden, die Plattformen unabhängig voneinander horizontal an der gemeinsamen Plattformführung zu verfahren, je nachdem was gerade benötigt wird, um den Freiraum für das Hindurchführen bzw. -greifen des Plattenaufnehmers an der Position zu schaffen, an der er gerade benötigt wird.

Es ist aber nicht zwingend notwendig, bei der Ausgestaltung der Erfindung jede Plattform mit einem individuellen Antrieb auszurüsten. Bei der Realisierung der Erfindung besteht vielmehr auch die Möglichkeit, dass die Lageretage oder, im Fall von mehreren Lageretagen, zumindest eine Lageretage einen gemeinsamen Antrieb zum Verfahren der, vorzugsweise aller, Plattformen der, vorzugsweise jeweiligen, Lageretage an der gemeinsamen Plattformführung der, vorzugsweise jeweiligen, Lageretage aufweist, wobei die Plattformen jeweils eine Koppeleinrichtung aufweisen, mit der sie individuell an den gemeinsamen Antrieb ankoppelbar und von diesem abkoppelbar sind. Mittels der Koppeleinrichtung können die einzelnen Plattformen an den gemeinsamen Antrieb angekoppelt werden, um gemeinsam entlang der jeweiligen Plattformführung verfahren zu werden. Will man die Plattformen der jeweiligen Lageretage hingegen unabhängig voneinander entlang der Plattformführung verfahren, so erlauben es die Koppeleinrichtungen, nur einzelne oder Gruppen von Plattformen an den gemeinsamen Antrieb anzukoppeln, um diese dann einzeln oder eben in den genannten Gruppen entlang der Plattformführung zu verfahren.

Auch die gemeinsamen Plattformführungen können sehr unterschiedlich ausgestaltet sein. Es kann sich z.B. um Oberflächen oder Schienen handeln, auf, in oder unter denen die einzelnen Plattformen der jeweiligen Lageretage, z.B. mittels Rollen oder Zahnrädern, verfahrbar gelagert sind. All dies fällt unter den Begriff des gemeinsamen oder auch unabhängig voneinander horizontal verfahrbaren Lagerns der Plattformen an der gemeinsamen Plattformführung. Besonders bevorzugte Varianten sehen in diesem Zusammenhang vor, dass die gemeinsame Plattformführung der, vorzugsweise jeweiligen, Lageretage zumindest zwei voneinander beabstandete und einander gegenüberliegende Führungsschienen aufweist und die Plattformen der, vorzugsweise jeweiligen, Lageretage mit Laufrollen an den Führungsschienen verfahrbar gelagert sind.

Günstig ist es im Sinne der optimalen Platzausnutzung auch, dass im Fall von einer einzigen Lageretage unter dieser Lageretage und im Fall von zwei oder mehr Lageretagen unter der untersten Lageretage zusätzliche, in ihrer Position fixe Lagerplätze zum darauf Lagern von einzelnen und/oder aufeinandergestapelten Platten angeordnet sind.

Damit Platten in das Plattenlager eingebracht oder aus diesem entnommen werden können, sehen bevorzugte Ausgestaltungsformen der Erfindung vor, dass eine Plattenzuführeinrichtung zum Zuführen von Platten in das Plattenlager und/oder eine Plattenabführeinrichtung zum Abführen von Platten aus dem Plattenlager in das Plattenlager integriert ist. Die Plattenzuführeinrichtung und die Plattenabführeinrichtung können voneinander getrennt ausgebildet sein. Dann wird die Plattenzuführeinrichtung ausschließlich zum Zuführen von Platten in das Plattenlager und die Plattenabführeinrichtung ausschließlich zum Abführen von Platten aus dem Plattenlager genutzt. Es ist aber auch eine integrierte Ausgestaltung der Plattenzuführeinrichtung mit der Plattenabführeinrichtung möglich. Mit dieser integrierten Einrichtung kann man dann dem Plattenlager sowohl Platten zuführen als auch Platten aus dem Plattenlager abführen bzw. entnehmen. Für die Ausgestaltung von Plattenzuführ- und Plattenabführeinrichtungen gibt es beim Stand der Technik zahlreiche Beispiele. Es kann sich z.B. um Rollenbahnen, Luftkissenbahnen mit entsprechenden Vorschubeinrichtungen, angetriebenen Rollen oder dergleichen handeln. Die Plattenzuführeinrichtung und Plattenabführeinrichtung können aber auch als Einlager- oder Auslagerplätze innerhalb des Plattenlagers ausgebildet sein, wobei auf den Einlagerplätzen dann z.B. mittels eines Gabelstaplers Platten abgelegt und bei den Auslagerplätzen dann Platten z.B. mittels des Gabelstaplers entnommen werden können.

In das Plattenlager kann gegebenenfalls zusätzlich aber auch eine Plattenbearbeitungsanlage zum Bearbeiten von Platten integriert sein. Bei der Plattenbearbeitungsanlage kann es sich z.B. um eine an sich bekannte Plattenaufteilanlage zum Zersägen von Platten und/oder Plattenstapeln handeln. Der Begriff des in das Plattenlager integriert seins besagt insbesondere, dass die Plattenzuführeinrichtung und/oder die Plattenabführeinrichtung und/oder die Plattenbearbeitungsanlage zumindest bereichsweise so im Plattenlager angeordnet ist, dass der Plattentransporteur des Plattenlagers mittels seines Plattenaufnehmers Platten von der Plattenzuführeinrichtung und/oder der Plattenabführeinrichtung und/oder der Plattenbearbeitungsanlage aufnehmen, dort hin transportieren und dort auch ablegen kann. Kurz gesagt sind die Plattenzuführeinrichtung, Plattenabführeinrichtung und/oder die Plattenbearbeitungsanlage dann in das Plattenlager integriert, wenn sie so angeordnet sind, dass sie für den Plattentransporteur erreichbar sind. Günstigerweise ist also vorgesehen, dass Platten mittels des Plattenstransporteurs von der Plattenzuführeinrichtung aufnehmbar und/oder auf der Plattenabführeinrichtung ablegbar und/oder auf der Plattenbearbeitungsanlage ablegbar und/oder von der Plattenbearbeitungsanlage aufnehmbar sind.

Neben dem Plattenlager an sich betrifft die Erfindung auch ein Verfahren zum Betrieb eines erfindungsgemäßen Plattenlagers. Bei diesem ist vorgesehen, dass Platten mittels des Plattentransporteurs auf den Lagerplätzen der Plattformen abgelegt und/oder von diesen aufgenommen werden, wobei die Plattformen zur Bereitstellung der Freiräume für das Hindurchführen, oder in anderen Worten Hindurchgreifen, des Plattenaufnehmers an den voneinander verschiedenen Positionen entlang der gemeinsamen Plattformführung verfahren werden. Bevorzugt ist dabei vorgesehen, dass am Plattenaufnehmer gehaltene Platten durch die Freiräume hindurch in den Bereich unterhalb dieser Lageretage abgesenkt und/oder durch die Freiräume hindurch aus dem Bereich unterhalb dieser Lageretage herausgehoben werden.

Weitere Details zu möglichen Ausgestaltungsformen erfindungsgemäßer Verfahren ergeben sich aus den obigen und nachfolgenden Schilderungen des Plattenlagers an sich. Nachfolgend werden mögliche Ausgestaltungsformen und Weiterbildungen der erfindungsgemäßen Grundidee anhand von Ausführungsbeispielen der Erfindung beispielhaft erläutert. Es zeigen:
Fig. 1 bis 6 schematisierte Darstellungen zu einem ersten erfindungsgemäßen Ausführungsbeispiel eines Plattenlagers;
Fig. 7 bis 10 mögliche Ausgestaltungsformen von Plattformen mit einem individuellen Antrieb;
Fig. 11 bis 13 eine Ausführungsform eines gemeinsamen Antriebs für die Plattformen einer Lageretage;
Fig. 14 bis 17 alternative Ausgestaltungsformen eines erfindungsgemäßen Plattenlagers und
Fig. 18 und 19 schematisiert dargestellte Beispiele von Energierückgewinnungseinrichtungen zur Rückgewinnung und Speicherung von Energie beim Abbremsen der Plattform und/oder des Plattentransporteurs.

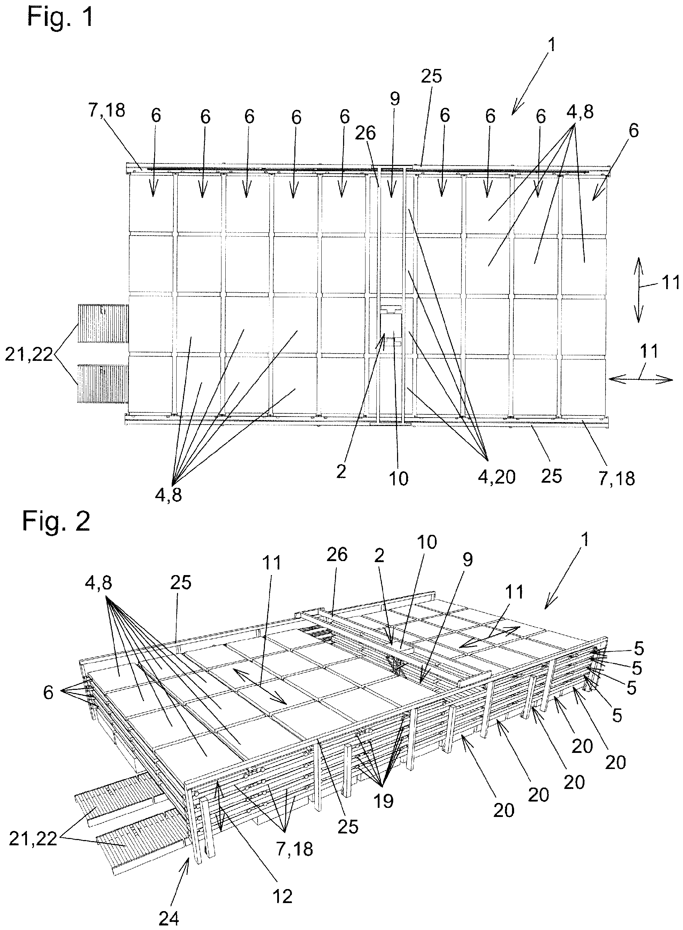

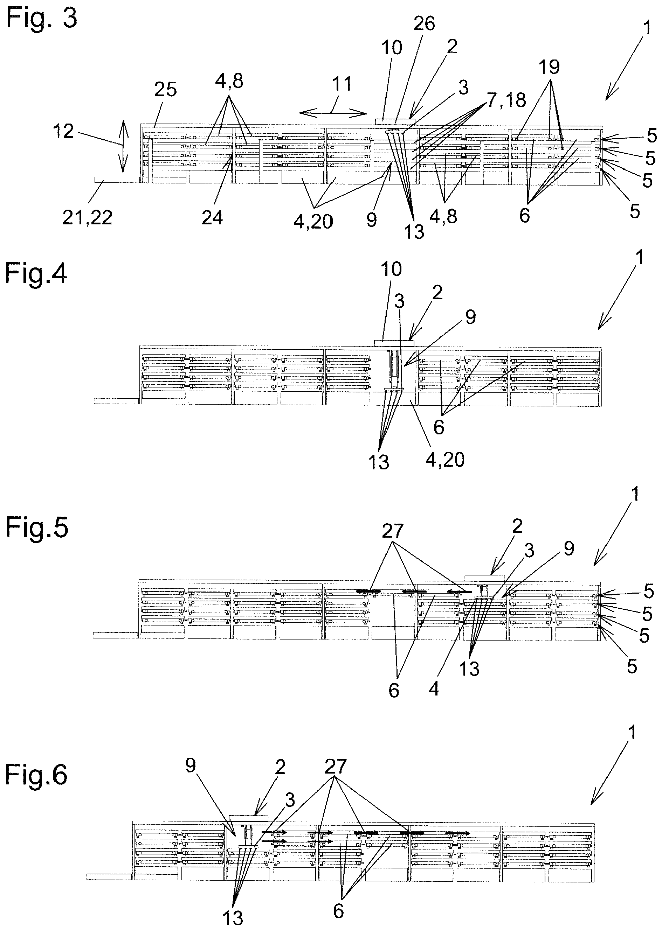

In Fig. 1 ist ein erstes Ausführungsbeispiel eines Plattenlagers 1 in einer Draufsicht gezeigt. Fig. 2 zeigt dieses erste Ausführungsbeispiel des erfindungsgemäßen Plattenlagers 1 in einer perspektivischen Darstellung. Die Fig. 3, 4, 5 und 6 zeigen Seitenansichten auf dieses erste Ausführungsbeispiel eines erfindungsgemäßen Plattenlagers 1, welche der nachfolgenden Erläuterung des Vorgehens beim Betrieb des erfindungsgemäßen Plattenlagers 1 dienen. In Fig. 3 sind die Führungsschienen 18 der jeweiligen Plattformführung 7 dargestellt. In Fig. 4, 5 und 6 sind diese Führungsschienen 18 der Plattformführungen 7 der Übersichtlichkeit halber nicht dargestellt.

Das Plattenlager 1 weist einen Plattentransporteur 2 mit einem in den Richtungen der Horizontalen 11 und in der Vertikalen 12 verfahrbaren Plattenaufnehmer 3 zum Aufnehmen, Transportieren und Ablegen von Platten 4 im Plattenlager 1 auf. Die mit den Bezugszeichen 4 gekennzeichneten Platten sind in allen Darstellungen sehr vereinfacht dargestellt. Es kann sich jeweils um Einzelplatten aber auch um Plattenstapel, also um aufeinandergestapelte Platten handeln. Es kann sich dabei um unterschiedlichste Typen und Formate von Platten handeln. Sie können auf den Lagerplätzen 8 der Plattformen 6, aber auch auf den fixen Lagerplatten 20 unter der untersten Lageretage 5 lagern. Die fixen Lagerplätze 20 sind direkt auf dem Boden des Plattenlagers 1 ausgebildet. Zusätzliche Lagerplätze 8 sind erfindungsgemäß auf den Plattformen 6 geschaffen. Im gezeigten ersten Ausführungsbeispiel weist das Plattenlager 1 beispielhaft vier übereinander angeordnete Lageretagen 5 auf. Bei jeder dieser Lageretagen 5 ist vorgesehen, dass mehrere Plattformen 6 dieser Lageretage 5 gemeinsam, aber auch unabhängig voneinander horizontal auf einer gemeinsamen Plattformführung 7 der jeweiligen Lageretage 5 verfahrbar gelagert sind. Die Plattformen 6 bilden dabei im gezeigten Ausführungsbeispiel jeweils vier Lagerplätze 8 zum darauf Lagern von einzelnen und/oder aufeinander gestapelten Platten 4 aus. Diese Platten 4 können, wie gesagt, individuell sehr unterschiedlich groß, dick, ausgeformt und dergleichen sein. Die Pattformführungen 7 sind jeweils so groß ausgebildet, dass durch gemeinsames aber auch unabhängiges Verfahren der Plattformen 6 auf der jeweiligen Plattformführung 7 an voneinander verschiedenen Positionen seitlich neben den aber auch zwischen den Plattformen 6 Freiräume 9 für ein Hindurchführen bzw. -greifen des Plattenaufnehmers 3 in einen Bereich des Plattenlagers 1 unterhalb der jeweiligen Lageretage 5 ausbildbar sind. Die jeweiligen Plattformführungen 7 der jeweiligen Lageretage 5 sind mittels Laufrollen 19 an jeweils zwei einander gegenüberliegenden Führungsschienen 18 der jeweiligen Plattformführung 7 verfahrbar gelagert. Die Plattformen 6 erstrecken sich also jeweils in einer Richtung der Horizontalen 11 zwischen den beiden Führungsschienen 18 der jeweiligen Plattformführung 7. In der dazu orthogonalen Richtung 11 sind die Plattformen 6 entlang der Führungsschiene 18 bzw. der Plattformführung 7 gemeinsam, aber auch unabhängig voneinander horizontal verfahrbar gelagert. Die Plattformen 6 der voneinander verschiedenen Lageretagen 5 können unabhängig voneinander an der jeweiligen Plattformführung 7 der jeweiligen Lageretage 5 horizontal verfahren werden.

Der Plattentransporteur 2 ist im gezeigten ersten, wie auch den anderen Ausführungsbeispielen als sogenanntes Portalhandling-Gerät ausgebildet. Erweist den Plattenaufnehmerträger 10 und den Plattenaufnehmer 3 auf. Der Plattenaufnehmer 3 hängt am Plattenaufnehmerträger 10 und kann von diesem zum Aufnehmen und Ablegen von Platten 4 entlang der Vertikalen 12 abgesenkt und angehoben werden. Der Plattenaufnehmerträger 10 ist entlang der Brücke 26 in den entsprechenden Richtungen der Horizontalen 11 verfahrbar gelagert, die Brücke 26 wiederum stützt sich auf den Fahrschienen 25 der Tragstruktur 24 ab und ist in den zu ihrer Längsrichtung orthogonalen Richtungen der Horizontalen 11 entlang der Fahrschienen 25 hin und her verfahrbar. Der Plattenaufnehmerträger 10 ist in diesem Ausführungsbeispiel in dieser Art und Weise über der obersten Lageretage 5 in zwei zueinander orthogonalen Richtungen entlang der Horizontalen 11 hin und her verfahrbar gelagert. Er kann also mit dem daran hängenden Plattenaufnehmer 3 in der Horizontalen 11 an die gewünschte Position verfahren werden, sodass dort der Plattenaufnehmer 3 zum Aufnehmen und/oder Ablegen von Platten 4 an den gewünschten Lagerplätzen 8 oder 20 entlang der Vertikalen 12 angehoben und/oder abgesenkt werden kann. Zum Aufnehmen der jeweiligen Platte 4 weist der Plattenaufnehmer 3, wie an sich bekannt, Ansaugvorrichtungen 13 auf. Mit diesen kann er zum Aufnehmen der Platte 4 die Platte ansaugen. Zum Ablegen, also zum Lösen der jeweiligen Platte 4 vom Plattenaufnehmer 3 wird die Ansaugvorrichtung 13 deaktiviert und der Unterdruck abgebaut, sodass der Plattenaufnehmer 3 von der jeweiligen Platte 4 gelöst wird. Solche Plattenaufnehmer 3 sind beim Stand der Technik bekannt und werden auch als sogenannte Sauggreifer bezeichnet. Natürlich kann, wie eingangs bereits dargelegt, der Plattenaufnehmer 3, aber auch der gesamte Plattentransporteur 2 in anderer an sich beim Stand der Technik bekannter Art und Weise ausgebildet sein, um Platten 4 zwischen den gewünschten Positionen im Plattenlager 1 hin und her transportieren zu können.

In den Fig. 1 und 2 sind auch die in diesem Ausführungsbeispiel realisierten Plattenzuführeinrichtungen 21 und Plattenabführeinrichtungen 22 gezeigt. Diese sind hier konkret als angetriebene Rollenbahnen ausgeführt. Sie dienen dazu, Platten 4 von außen dem Plattenlager 1 zuzuführen oder aus diesem zu entnehmen. Jede der beiden hier gezeigten Einrichtungen kann als Plattenzuführeinrichtung 21 oder auch als Plattenabführeinrichtung 22 ausgebildet sein. Es ist auch denkbar, dass beide Einrichtungen sowohl Platten zuführen als auch abführen können. Dann handelt es sich um kombinierte Plattenzuführ- und Plattenabführeinrichtungen 21 bzw. 22. Es ist aber auch genauso gut denkbar, eine der Einrichtungen nur als Plattenzuführeinrichtung 21 und die andere nur als Plattenabführeinrichtung 22 zu verwenden. Natürlich könnten diese Einrichtungen auch anders ausgestaltet sein, z.B. als Luftkissenbahnen oder auch als einfache Einlagerungs- bzw. Auslagerungsplätze auf die mittels Gabelstapler oder dergleichen Platten 4 eingelagert oder aus diesen entnommen werden können. Die Plattenzuführeinrichtungen 21 bzw. Plattenabführeinrichtungen 22 sind jedenfalls so in das Plattenlager 1 integriert, dass sie für den Plattentransporteur in der eingangs erläuterten Art und Weise zu erreichen sind.

Erfindungsgemäß ist in jeder der hier realisierten Lageretagen 5 die Plattformführung 7 so groß ausgebildet, dass durch unterschiedliches Positionieren der Plattformen 6 an der Plattformführung 7 an voneinander verschiedenen Positionen seitlich neben den und zwischen den Plattformen 6 Freiräume 9 für ein Hindurchführen bzw.-greifen des Plattenaufnehmers 3 in einen Bereich des Plattenlagers 1 unterhalb der jeweiligen Lageretage 5 ausgebildet werden können. Dies wird nun beispielhaft anhand der Fig. 3-6 erläutert.

Fig. 3 zeigt eine Situation, bei der die Plattformen 6 der vier übereinander angeordneten Lageretagen 5 entlang ihrer jeweiligen Plattformführung 7 so verfahren wurden, dass ein in Richtung der Vertikalen 12 durchgehender Freiraum 9 ausgebildet wurde. Fig. 4 zeigt, wie der Plattenaufnehmer 3 durch diesen Freiraum 9 hindurchgreift bzw. in diesen in einen Bereich des Plattenlagers 1 unterhalb der untersten Lageretage 5 abgesenkt werden kann. Dort kann, wie in Fig. 4 zu sehen, der Plattenaufnehmer 3 mit seinen Ansaugvorrichtungen 13 die oberste Platte des dort angeordneten fixen Lagerplatzes 20 aufnehmen, um sie dann anschließend an eine andere Stelle im Plattenlager 1 zu transportieren. Hierzu wird zunächst der Plattenaufnehmer 3 mit der daran befestigten Platte 4 durch den Freiraum 9 hindurch über die oberste Lageretage 5 bzw. die darauf lagernden Platten 4 angehoben. Anschließend kann dann der Plattenaufnehmerträger 10 zusammen mit dem Plattenaufnehmer 3 und der daran befestigten Platte 4 in der oben geschilderten Art und Weise in entsprechenden Richtungen der Horizontalen 11 an die Position im Plattenlager 1 verfahren werden, unter der sich der Lagerplatz 8 bzw. 20 befindet, an der die am Plattenaufnehmer 3 aktuell befestigte Platte 4 abgelegt werden soll. Befindet sich der anvisierte Lagerplatz 8 auf einer Plattform 6 der obersten Lageretage 5, so kann das Ablegen der Platte 4 mittels des Plattentransporteurs 2 unmittelbar erfolgen. Befindet sich der anvisierte Lagerplatz 8 oder 20 aber in einer weiter unten angeordneten Lageretage 5 oder handelt es sich eben um einen fixen Lagerplatz 20, so muss zunächst an der gewünschten Position ein entsprechend weit nach unten reichender Freiraum 9 geschaffen werden. Hierzu werden alle sich über dem gewünschten Lagerplatz 8 bzw. 20 befindenden Plattformen 6 entlang ihrer jeweiligen Plattformführung 7 in der jeweiligen Lageretage 5 so verfahren, dass der gewünschte Freiraum 9 an der gewünschten Position im Plattenlager 1 ausgebildet wird und anschließend die Platte 4, welche sich noch am Plattenaufnehmer 3 befindet, durch entsprechendes Absenken des Plattenaufnehmers 3 in den neu geschaffenen Freiraum 9 auf dem gewünschten Lagerplatz 8 bzw. 20 abgelegt werden kann. In den Fig. 5 und 6 ist der Vorgang des entsprechenden Verschiebens der Plattformen 6 in den entsprechenden Lageretagen 5 mittels der Pfeile 27 beispielhaft dargestellt. In dieser Art und Weise kann durch gemeinsames, aber auch voneinander unabhängiges Verfahren der Plattformen 6 in den jeweiligen Lageretagen 5 entlang der jeweiligen gemeinsamen Plattformführungen 7 an jeder beliebigen gewünschten Stelle im Plattenlager 1 der benötigte Freiraum 9 geschaffen werden, um so dort eine Platte 4 abzulegen oder von dort aufzunehmen. Auf diese nun beispielhaft erläuterte Art und Weise kann gemäß der Erfindung mittels einer entsprechenden Vielzahl von Plattformen 6 und Lageretagen 5 auf einer relativ kleinen Grundfläche des Plattenlagers 1 eine sehr große Anzahl von möglichen Lagerplätzen 8 bzw. 20 geschaffen werden, sodass eine Vielzahl von Platten 4 sortenrein im Plattenlager gelagert bzw. aufgestapelt werden kann, wodurch insgesamt die für den Plattentransport benötigten Bewegungen des Plattentransporteurs 2 gegenüber dem Stand der Technik deutlich verringert werden. Wie eingangs erläutert, kann das so erläuterte Prinzip bei Plattenlagern 1 mit nur einer Lageretage 5 aber auch mit mehreren Lageretagen 5 realisiert werden.

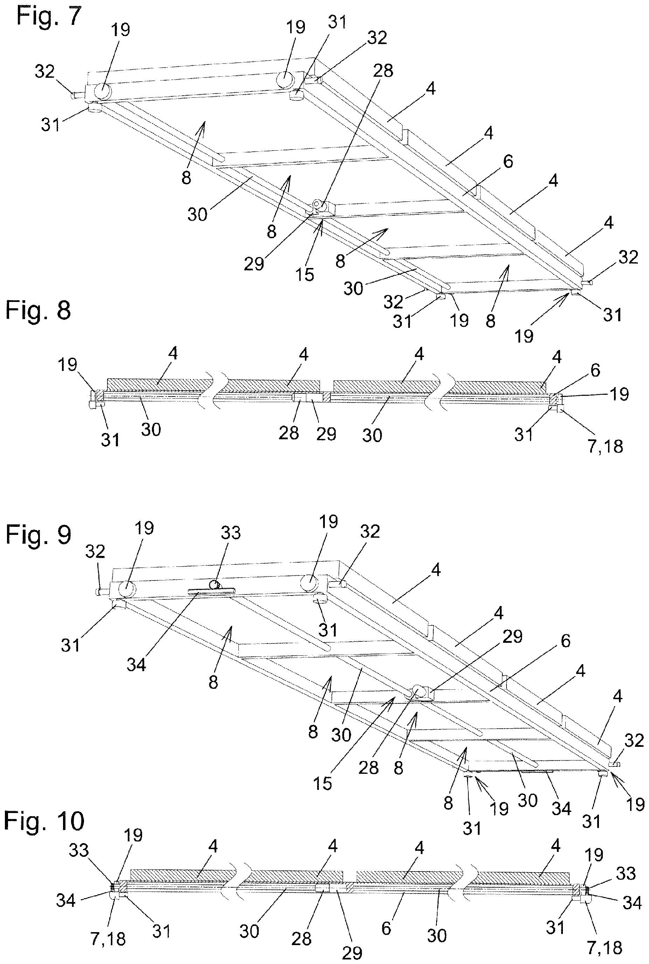

Zur Ausbildung der für das Verfahren der Plattformen 6 entlang der jeweiligen Plattformführung 7 benötigten Antriebe gibt es, wie eingangs erläutert, unterschiedliche Möglichkeiten. In den Fig. 7 bis 10 sind Varianten gezeigt, bei denen die Plattformen 6 zum Verfahren an der gemeinsamen Plattformführung 7 jeweils mittels eines individuellen, nur dieser jeweiligen Plattform 6 zugeordneten Antriebs 15 angetrieben sind. Eine erste solche Variante zeigt Fig. 7 in einer perspektivischen Ansicht von schräg unten auf eine Plattform 6, welche in diesem Ausführungsbeispiel als rahmenförmiger Träger ausgebildet ist. Fig. 8 zeigt einen Längsschnitt durch die Plattform 6 der Fig. 7 mit den auf den entsprechenden Lagerplätzen 8 der Plattform 6 lagernden Platten 4 im Bereich des individuellen Antriebs 15. An der Plattform 6 befinden sich die Laufrollen 19, mit denen die Plattform 6 verfahrbar an den Führungsschienen 18 der jeweiligen Plattformführung 7 gelagert ist. Die optionalen Führungsrollen 31 an der Plattform 6 rollen ebenfalls an den Führungsschienen 18 ab und sorgen dafür, dass die Plattform 6 beim Verfahren entlang der Plattformführung 7 sauber geführt ist. Die Anordnung der Laufrollen 19 und der Führungsrollen 31 auf bzw. an den Führungsschienen 18 der Plattformführung 7 ist gut in dem Schnitt gemäß Fig. 8 zu sehen. Der individuelle Antrieb 15 dieses Ausführungsbeispiels weist einen Motor, insbesondere Elektromotor 28 auf, welcher über ein hier nicht im Detail dargestelltes Getriebe 29 die beiden Antriebswellen 30 in der jeweils gewünschten Richtung dreht. An den Enden der Antriebswellen 30 befinden sich jeweils angetriebene Laufrollen 19. Durch entsprechendes Betätigen des Motors 28 können diese mit den Antriebswellen 30 verbundenen Laufrollen 19 also in einander entgegengesetzten Richtungen gedreht werden, um so die Plattform 6 individuell oder aber auch gemeinsam mit anderen Plattformen 6 entlang der Plattformführung 7 in die gewünschte Richtung in der Horizontalen 11 verfahren zu können. Geschwindigkeit und Verfahrrichtung können durch entsprechende Ansteuerung des Motors 28 eingestellt werden.

Der Vollständigkeit halber wird darauf hingewiesen, dass eine unterschiedliche Anzahl von Laufrollen 19 pro Plattform 6 mittels eines individuellen Antriebs 15 angetrieben werden kann. So kann nur eine Laufrolle 19 pro Plattform 6 angetrieben sein. Es können, wie in Fig. 7 und 8 gezeigt, zwei einander gegenüberliegende Laufrollen 19, also pro Führungsschiene 18 eine Laufrolle 19, oder auch mehr als zwei oder alle Laufrollen 19 einer Plattform 6 mittels eines individuellen Antriebs 15 angetrieben werden. Der individuelle, jeweils nur der jeweiligen Plattform 6 zugeordnete Antrieb 15 kann dafür einen oder mehrere Motoren 28 und eine geeignete Anzahl von Getrieben 29 aufweisen. Die Anzahl der angetriebenen Laufrollen 19 kann an die Größe und das Gewicht sowie die zulässige Auflast und Dynamik einer jeweiligen Plattform 6 angepasst sein.

Die Anschlagpuffer 32 der jeweiligen Plattform 6 treffen auf entsprechende Anschlagpuffer 32 einer anderen benachbarten Plattform 6, wenn diese beiden Plattformen 6 gegeneinander gefahren werden. Sie sorgen für einen gewünschten Mindestabstand zwischen den jeweils aneinander angrenzenden Plattformen 6, sodass die auf den Lagerplätzen 8 der Plattformen 6 gelagerten Platten 4 benachbarter Plattformen 6 sich nicht berühren.

Die Fig. 9 und 10 zeigen beispielhaft eine mögliche andere Ausgestaltungsform eines individuellen Antriebs 15 für die jeweilige Plattform 6. Fig. 10 zeigt wiederum einen Längsschnitt im Bereich des Antriebs 15 durch die Plattform 6 und die darauf lagernden Platten 4. Auch hier werden entsprechende Antriebswellen 30 mittels eines entsprechenden, vorzugsweise elektrisch angetriebenen, Motors 28 und Getriebes 29 gedreht. An den äußeren Enden der Antriebswellen 30 befinden sich nun aber keine angetriebenen Laufrollen 19 sondern Zahnräder 33, welche in an den Führungsschienen 18 der Plattformführung 7 fixierte Zahnstangen 34 eingreifen. Die Zahnstangen 34 sind in Fig. 9 nur schematisch und verkürzt dargestellt, sie verlaufen günstigerweise entlang der gesamten Längserstreckung der jeweiligen Führungsschiene 18. In diesem Ausführungsbeispiel der Fig. 9 und 10 sind somit alle Laufrollen 19 nicht angetrieben sondern freilaufend ausgestaltet. Der Antrieb zum Verfahren der Plattform 6 entlang der jeweiligen Plattformführung 7 in den einander entgegengesetzten Richtungen der Horizontale 11 erfolgt somit durch entsprechendes Drehen der Zahnräder 33, woraus sich über den entsprechenden Eingriff in die jeweilige Zahnstange 34 die entsprechenden Verfahrbewegungen entlang der Plattformführung 7 ergeben. Abgesehen von den dargelegten Unterschieden entspricht dieses Ausführungsbeispiel gemäß der Fig. 9 und 10 dem der Fig. 7 und 8. Die Anzahl der angetriebenen Zahnräder 33 kann analog zu den obigen Ausführungen zur Anzahl der angetriebenen Laufrollen 19 an die jeweilige Aufgabenstellung und Lastanforderungen angepasst sein.

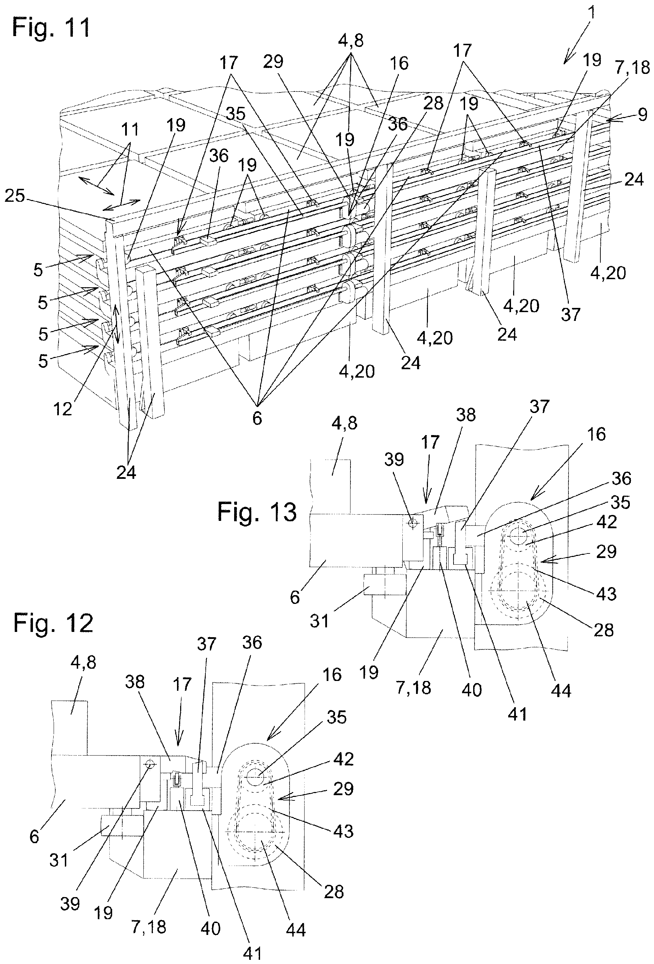

In den Fig. 11 bis 13 ist nun ein Ausführungsbeispiel gezeigt, bei dem die Plattformen 6 zum gemeinsamen, aber auch zum voneinander unabhängigen Verfahren an der gemeinsamen Plattformführung 7 der jeweiligen Lageretage 5 mittels eines gemeinsamen Antriebs 16 angetrieben werden, wobei die Plattformen 6 der jeweiligen Lageretage 5 jeweils eine Koppeleinrichtung 17 aufweisen, mit der sie individuell an den gemeinsamen Antrieb 16 ankoppelbar und von diesem abkoppelbar sind.

Hierdurch ist es möglich, alle Plattformen 6 einer Lageretage 5 mittels eines einzigen Antriebs, hier mittels eines einzigen Motors, vorzugsweise Elektromotors 28, gemeinsam oder einzeln entlang der Plattformführung 7 in den Horizontalrichtungen 11 zu verfahren, um so den entsprechenden Freiraum 9 an der gewünschten Position in der Lageretage 5 zu schaffen. Im hier gezeigten Ausführungsbeispiel ist, wie in Fig. 11 gut zu sehen, jeder Lageretage 5 ein solcher gemeinsamer Antrieb 16 zugeordnet. Die gemeinsamen Antriebe 16 der einzelnen Lageretagen 5 sind baugleich ausgeführt. In Fig. 11 ist der Übersichtlichkeit halber hier nur der gemeinsame Antrieb 16 der obersten Lageretage 5 mit Bezugszeichen beschriftet. Der gemeinsame Antrieb 16 des hier gezeigten Ausführungsbeispiels weist eine Antriebsstange 37 auf, welche an einer der Führungsschienen 18 der Plattformführung 7 der jeweiligen Lageretage 5 in Längsrichtung der Führungsschiene 18 in einer Stangenführungsschiene 41 verschiebbar geführt ist. Mittels der Spindelfixierungen 36 ist eine Spindel 35 an dieser Antriebsstange 37 fixiert. Diese starr an der Antriebsstange 37 fixierte Spindel 35 greift in eine mittels des Motors 28 und des Getriebes 29 in einander entgegengesetzte Richtungen drehbare Mutter 42 ein. Der Motor 28 und das Getriebe 29 sind in diesem Ausführungsbeispiel an der Führungsschiene 18 der jeweiligen Plattformführung 7 fixiert, sodass durch Drehen der Mutter 42 in die jeweilige Richtung die Spindel 35 zusammen mit der Antriebsstange 37 in die entsprechende Richtung entlang der Führungsschiene 18 verschoben wird. Durch entsprechendes An- oder Abkoppeln der jeweiligen Plattform 6 mittels ihrer Koppeleinrichtung 17 folgt die Plattform 6 dieser Bewegung der Antriebsstange 37 in horizontaler Richtung entlang der Führungsschiene 18 oder eben auch nicht. Durch entsprechendes An- und Abkoppeln der jeweiligen Plattform 6 kann diese gemeinsam, aber auch individuell mittels des gemeinsamen Antriebs 16 in der entsprechenden Richtung der Horizontalen 11 entlang der Führungsschiene 18 verfahren werden. Details zu der hier gewählten Ausgestaltungsform der Koppeleinrichtung 17 sind in den Fig. 12 und 13 dargestellt, wobei Fig. 12 den eingekoppelten Zustand und Fig. 13 den abgekoppelten Zustand zeigt. In den Fig. 12 und 13 ist zumindest schematisch auch die Mutter 42 und das sie antreibende Getriebe 29 zusammen mit dem Motor 28 dargestellt. Die Mutter 42 greift, wie gesagt, in die Spindel 35 ein. Angetrieben wird die Mutter 42 über einen Antriebsriemen 43 oder eine entsprechende Antriebskette, welche wiederum von einer hier nur schematisiert dargestellten Motorwelle 44 des Motors 28 angetrieben wird. Auf diese Art und Weise wird im gezeigten Ausführungsbeispiel die Drehung der Motorwelle 44 in die entsprechende Richtung in eine Drehung der Mutter 42 in die entsprechende Richtung umgesetzt, woraus sich dann letztendlich die geschilderte Verfahrbewegung entlang der Führungsschiene 18 ergibt. Dies ist natürlich nur eines von vielen Möglichkeiten, ein solches Getriebe 29 auszubilden. Die Motorwelle 44 könnte z.B. auch direkt über eine entsprechende Verzahnung in eine entsprechende Außenverzahnung der Mutter 42 eingreifen. Darüber hinaus gäbe es natürlich auch noch viele andere Möglichkeiten. Es könnte z.B. auch vorgesehen sein, die Mutter 42 fix, also nicht drehbar und die Spindel 35 mittels eines Motors 28 und gegebenenfalls eines Getriebes 29 drehbar auszugestalten, um so die entsprechende Verschiebebewegung der Antriebsstange 37 und damit letztlich eine entsprechende Verfahrbewegung der Plattformen 6 zu erzeugen. Zur Antriebsstange 37 sei darauf hingewiesen, dass dieser Begriff nicht einengend gelesen werden soll. Es kann sich um eine Stange oder eine Schiene oder einen anderen längserstreckten Körper handeln. Entsprechendes gilt für die sie führende Stangenführungsschiene 41, welche an der Führungsschiene 18 fixiert ist. Im gezeigten Ausführungsbeispiel sind in Längsrichtung der Antriebsstange 37 voneinander beabstandet in der Antriebsstange 37 Kerben angeordnet, in die zum Ankoppeln die Nocken 38 der Koppeleinrichtungen 17 der jeweiligen Plattformen 6 einkoppeln können. Zum Entkoppeln der jeweiligen Plattform 6 vom gemeinsamen Antrieb 16 werden im gezeigten Ausführungsbeispiel die entsprechenden Nocken 38 entsprechend aus der jeweiligen Kerbe der Antriebsstange 37 herausgeschwenkt. Fig. 12 zeigt den angekoppelten, Fig. 13 den abgekoppelten Zustand. Der Nocken 38 der jeweiligen Koppeleinrichtung 17 ist über das Schwenkgelenk 39 schwenkbar an der Plattform 6 gelagert. Günstigerweise ist er mittels einer hier nicht näher dargestellten Vorspannfeder oder auch nur der Schwerkraft folgend in Richtung hin zu seiner angekoppelten Stellung vorgespannt. Für das Abkoppeln wird in diesem Ausführungsbeispiel der Nockenantrieb 40 verwendet, welcher den jeweils gerade darüber angeordneten Nocken 38 so anhebt, dass der Nocken 38, wie in Fig. 13 gezeigt, nicht mehr in die entsprechende Kerbe in der Antriebsstange 37 eingreift. Beim Nockenantrieb 40 handelt es sich in diesem Ausführungsbeispiel um einen Linearantrieb der zwischen den Positionen gemäß Fig. 12 und 13 hin und her verfahrbar ist, um so zur Herbeiführung des jeweiligen Kopplungszustandes den Nocken 38 auszulenken oder nicht. Die Nockenantriebe 40 sind in entsprechenden Abständen entlang der Führungsschiene 18 so an dieser fixiert, dass die sich jeweils gerade in dieser Position befindende Plattform 6 entsprechend an- oder abgekoppelt werden kann.

Natürlich ist dieser hier beispielhaft gezeigte gemeinsame Antrieb 16 nur eine von vielen möglichen Ausgestaltungsformen. Z.B. könnte der elektrisch angetriebene Spindelantrieb dieses Ausführungsbeispiels durch entsprechende hydraulische oder pneumatische Antriebe, insbesondere Kolben-Zylinder-Anordnungen ersetzt werden, um so die Antriebsstange 37 und die gerade mit ihr gekoppelten Plattformen 6 in den entsprechenden horizontalen Richtungen entlang der Führungsschienen 18 zu verschieben.

Es sind beispielsweise auch Ausführungen möglich, bei der pro Lageretage 5 zwei einander gegenüberliegende gemeinsame Antriebe 16, also z.B. einer pro Führungsschiene 18, vorhanden sind, welche miteinander synchronisiert sind. Die Synchronisierung kann dabei elektrisch gesteuert erfolgen. Sinnvoll ist dies insbesondere bei langen Plattformen 6, also wenn der Abstand zwischen den Führungsschienen 18 einer Plattformführung 7 der jeweiligen Lageretage 5 sehr groß ist.

An dieser Stelle wird auch darauf hingewiesen, dass in allen den hier gezeigten Ausgestaltungsformen der Plattenlager 1 jeweils alle hier beschriebenen individuellen Antriebe 15 aber auch gemeinsame Antriebe 16 realisiert sein können, um so die Plattformen 6 in den jeweiligen Lageretagen 5 gemeinsam und auch unabhängig voneinander horizontal entlang der jeweiligen gemeinsamen Plattformenführungen 7 verfahren zu können.

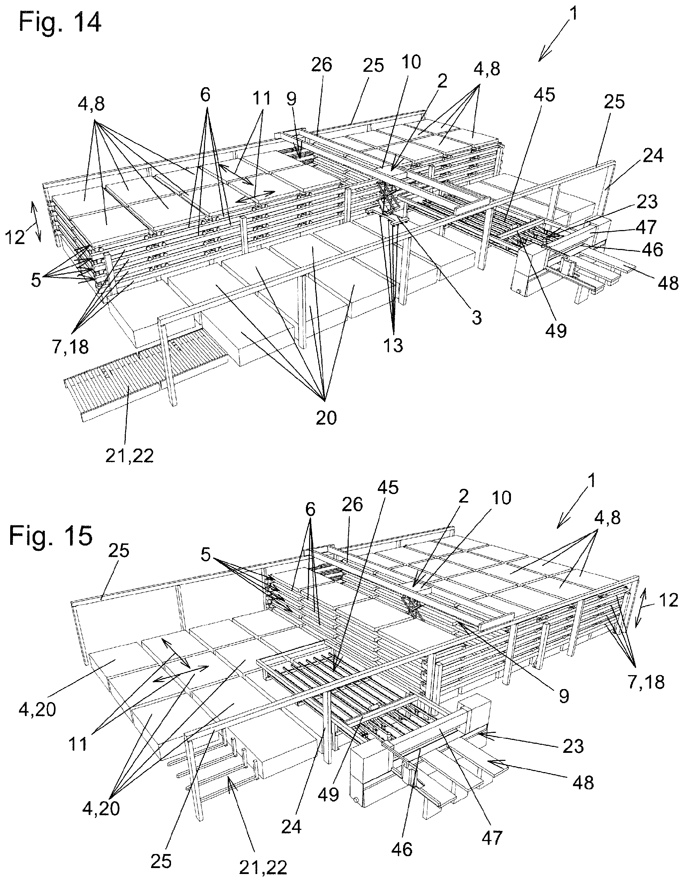

Nachfolgend werden anhand der Fig. 14 bis 17 Abwandlungsformen des ersten Ausführungsbeispiels eines erfindungsgemäßen Plattenlagers 1 erläutert. Es wird in diesem Zusammenhang nur auf die Unterschiede zum ersten Ausführungsbeispiel eingegangen. Ansonsten wird auf die Erläuterungen zum ersten Ausführungsbeispiel verwiesen.

In der Variante gemäß Fig. 14 sind die erfindungsgemäßen Lageretagen 5 mit den darauf entlang der jeweiligen Plattformführung 7 verfahrbaren Plattformen 6 nur im hinteren Bereich des Plattenlagers 1 ausgebildet. Im vorderen Bereich befinden sich ausschließlich fixe Lagerplätze 20, sowie die hier kombiniert ausgebildete Plattenzuführeinrichtung 21 und Plattenabführeinrichtung 22, welche wiederum als angetriebene Rollenbahn ausgeführt ist, um so Platten 4 von außen in das Plattenlager 1 einzubringen oder von diesem zu entnehmen. In das Plattenlager 1 ist im vorderen Bereich, in dem sich keine Lageretagen 5 befinden, in der Variante gemäß Fig. 14 aber auch eine Plattenbearbeitungsanlage 23 in Form einer Plattenaufteilanlage integriert. Der Plattentransporteur 2 kann Platten von allen Lagerplätzen 8 und 20 des Plattenlagers 1 auf andere Lagerplätze 8 bzw. 20 umlagern oder aber auch der Plattenzuführeinrichtung und Plattenabführeinrichtung 21 und 22 zuführen oder von dieser abholen und/oder auch Platten 4 auf den Plattenzuführbereich 45 der Plattenbearbeitungsanlage 23 auflegen oder von dieser abholen. Hierbei ist darauf hinzuweisen, dass es sich bei der Plattenbearbeitungsanlage 23 um eine an sich bekannte Plattenbearbeitungsanlage wie der hier beispielhaft dargestellten Plattenaufteilanlage handeln kann. Es kann sich natürlich auch um Plattenbearbeitungsanlagen zum Kantenleimen, Bohren, Fräsen oder anderweitige Bearbeitung von Platten 4 handeln. Im konkret gezeigten Ausführungsbeispiel weist die als Plattenbearbeitungsanlage 23 ausgebildete Plattenaufteilanlage neben dem bereits erwähnten Plattenzuführbereich 45, wie an sich bekannt, die Sägelinie 46 und den Druckbalken 47 sowie den Plattenentnahmebereich 48 auf. Im Plattenzuführbereich 45 befindet sich eine an sich bekannte Vorschubeinrichtung 49, mit der die auf dem Plattenzuführbereich abgelegten Platten 4 zum Zersägen der Sägelinie 46 zugeführt aber auch wieder von dieser zurückgezogen werden können. Eine detailliertere Beschreibung der Plattenbearbeitungsanlage 23 kann entfallen, da dies wie im Stand der Technik an sich bekannt, ausgebildet werden kann.

In Fig. 15 sind die Lageretagen 5 nur auf einer Seite des Plattenlagers 1 ausgebildet. Auch hier ist eine Plattenbearbeitungsanlage 23 entsprechend in das Plattenlager 1 integriert. Die Plattenzuführeinrichtung 21 und die Plattenabführeinrichtung 22 sind als einfacher Einlager- und Auslagerplatz ausgebildet, auf dem neue Platten 4 mittels eines Gabelstaplers abgelegt oder von dem zu entnehmende Platten 4 mittels eines Gabelstaplers abgeholt werden können.

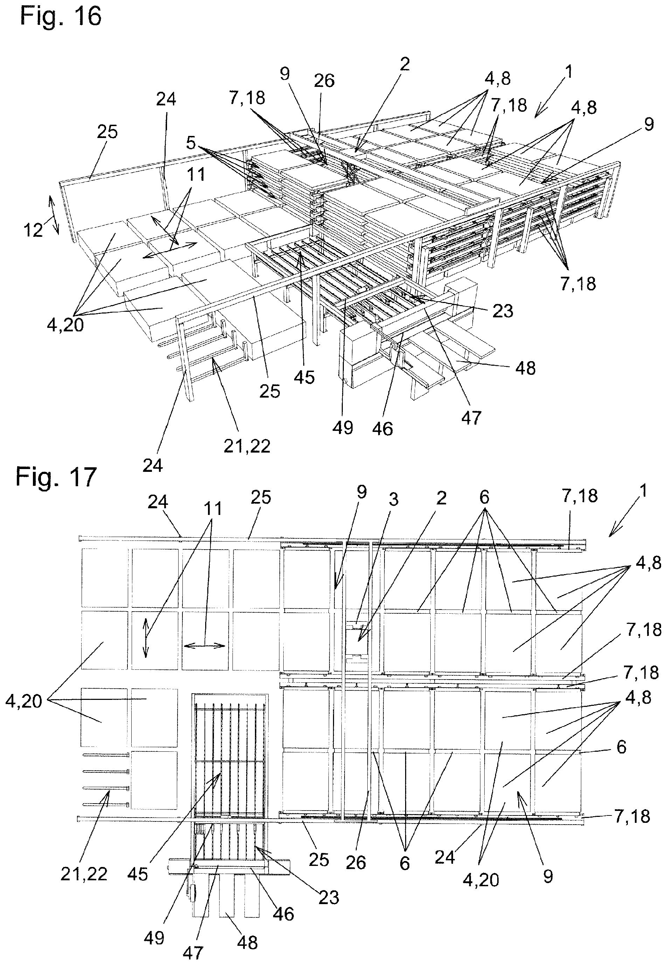

Ansonsten gilt für die Variante gemäß Fig. 15, das zu den anderen bisher geschilderten Ausführungsbeispielen der Plattenlager 1 Gesagte. Fig. 16 zeigt wiederum in einer perspektivischen Darstellung eine Abwandlungsform der Variante gemäß Fig. 15. Fig. 17 zeigt eine Draufsicht auf die Variante gemäß Fig. 16. Der einzige Unterschied zur Fig. 15 ist bei dieser Variante, dass die Plattformen 6 der Lageretagen 5 kürzer ausgebildet sind, sodass in der Mitte zusätzliche Führungsschienen 18 bzw. Plattformführungen 7 realisiert sind. In diesem Ausführungsbeispiel erstrecken sich die einzelnen Plattformen 6 also nicht über den gesamten Bereich zwischen den beiden Fahrschienen 25. Dies ändert aber nichts an der grundsätzlichen erfindungsgemäßen Art und Weise, wie das erfindungsgemäße Plattenlager 1 ausgestaltet und betrieben werden kann.

Wie eingangs bereits erläutert, kann bei bevorzugten Ausgestaltungsformen der Erfindung vorgesehen sein, dass das Plattenlager 1 zumindest eine Energierückgewinnungseinrichtung 14 zur Rückgewinnung und Speicherung von Energie beim Abbremsen der Plattform 6 und/oder des Plattentransporteurs 2 aufweisen. Bei entsprechenden elektrischen Antrieben kann es sich hier um Energierückgewinnungseinrichtung 14 zur Rückgewinnung und Speicherung von elektrischer Energie handeln. Wie eingangs bereits erläutert, ist es aber auch möglich, bei der Verwendung von anderen z.B. hydraulischen oder pneumatischen Antrieben entsprechende Energierückgewinnungseinrichtungen 14 zu realisieren, um die beim Abbremsen abgebaute kinetische Energie der Plattformen 6 und/oder des Plattentransporteurs 2 zwischenzuspeichern und für spätere Bewegungen zu nutzen.

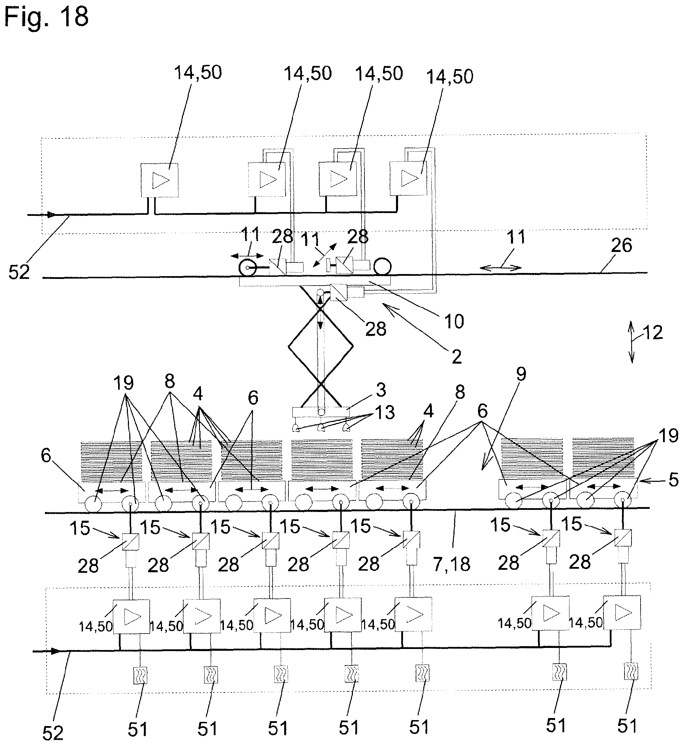

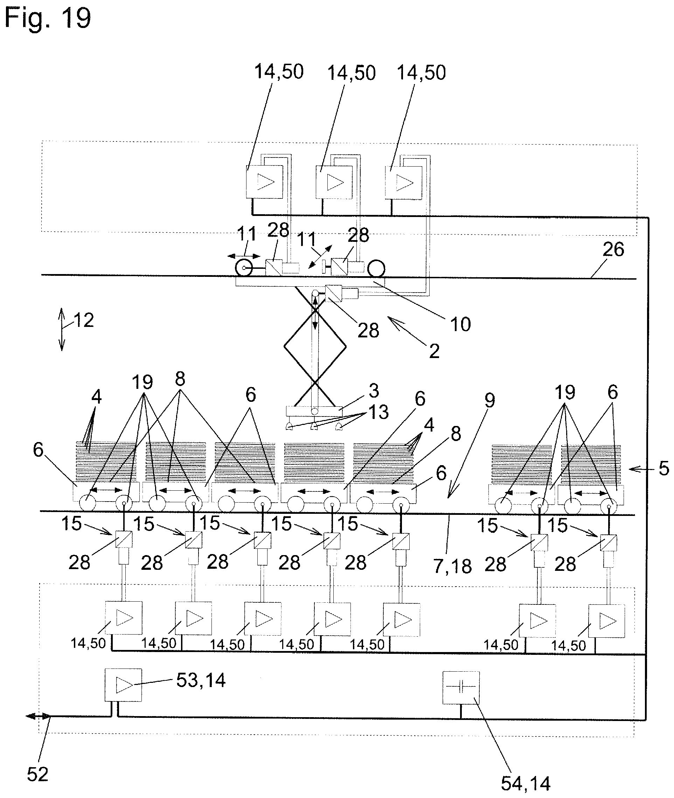

In den Fig. 18 und 19 werden beispielhaft Möglichkeiten für solche Energierückgewinnungseinrichtungen 14 bei erfindungsgemäßen Plattenlagern 1 erläutert. Es handelt sich hierbei um reine Schemadarstellungen. Fig. 18 zeigt die mit den entsprechenden Platten 4 beladenen Plattformen 6 auf einer Plattformführung 7 einer einzelnen Lageretage 5. Diese sind gemeinsam oder auch einzeln also unabhängig voneinander entlang der Plattformführung 7 so verfahrbar, dass neben und zwischen ihnen jeweils der benötigte Freiraum 9 ausgebildet werden kann. Dies kann wie in den vorab geschilderten Ausführungsvarianten realisiert sein. Zum Aufnehmen, Ablegen und Transportieren der Platten 4 ist der Plattentransporteur 2 vorgesehen, welcher mit seinem Plattenaufnehmerträger 10 entlang der Brücke 26 mittels eines entsprechenden Motors 28 verfahren werden kann. In die zweite Richtung der Horizontalen 11 wird die Brücke 26, hier also normal zur Zeichnungsebene, mittels des anderen Motors 28 angetrieben. Ein dritter Motor 28 dient zum Anheben und Absenken des am Plattenaufnehmerträger 10 in an sich bekannter Art und Weise hängenden Plattenaufnehmers 3 in den Richtungen der Vertikalen 12. Für jeden dieser, dem Plattentransporteur 2 zugeordneten Motoren 28 ist ein Antriebsregler 50 vorgesehen, welcher über den elektrischen Netzanschluss 52 mit elektrischer Energie versorgt wird. In den Antriebsregler 50 ist in an sich bekannter Art und Weise eine Energierückgewinnungseinrichtung 14 zur Zwischenspeicherung von beim Abbremsen des Plattentransporteurs 2 entstehender Energie integriert. Entsprechende elektrische Antriebsregler 50 mit entsprechenden elektrischen Energiespeichereinrichtungen sind beim Stand der Technik an sich bekannt und müssen nicht weiter beschrieben werden. Den individuell den jeweiligen Motoren 28 zugeordneten Antriebsreglern 50 des Plattentransporteurs 2 ist ein vierter Antriebsregler 50 vorgeschaltet, welcher ebenfalls über mit einem entsprechenden Energiespeicher als Energierückgewinnungseinrichtung 14 ausgebildet sein kann.

Die in Fig. 18 schematisiert dargestellten Plattformen 6 weisen in diesem Ausführungsbeispiel jeweils einen individuellen Antrieb 15 mit einem entsprechenden Motor, hier Elektromotor 28 auf. Jeder dieser Elektromotoren 28 der Plattform 6 wird über einen entsprechenden Antriebsregler 50 angesteuert. In diese Antriebsregler 50 sind wiederum elektrische Energiezwischenspeicher integriert, sodass diese Antriebsregler 50 auch jeweils als eine Energierückgewinnungseinrichtung 14 zur Zwischenspeicherung bzw. Rückgewinnung der beim Abbremsen der Plattformen 6 im Motor 28 erzeugten elektrischen Energie dienen. Wie an sich bekannt, funktionieren alle hier dargestellten elektrischen Motoren 28 im jeweiligen Bremsvorgang auch als Generatoren zur Erzeugung von elektrischer Energie, welche dann im entsprechenden Antriebsregler 50, also in der Energierückgewinnungseinrichtung 14 gespeichert werden kann, um so beim nächsten Beschleunigungsvorgang genutzt zu werden.

Für den Fall, dass die beim Bremsvorgang rückgespeiste elektrische Energie die Speicherkapazität des jeweiligen Antriebsreglers 50 überschreitet, ist in diesem Ausführungsbeispiel an jeden Antriebsregler 50 noch ein Bremswiderstand 51 angeschlossen, mit dem überschüssige elektrische Energie abgebaut, also in Wärme umgewandelt werden kann. Die Antriebsregler 50 der individuellen Antriebe 15 der Plattformen 6 werden wiederum über einen entsprechenden elektrischen Netzanschluss 52 gespeist.

In Fig. 19 sind aufbauend auf dem Ausführungsbeispiel gemäß Fig. 18 noch weitere Möglichkeiten zur Ausgestaltung von Energierückgewinnungseinrichtungen 14 gezeigt. Konkret ist hier hinter dem elektrischen Netzanschluss 52 noch ein Rückspeisemodul 53 und ein Energiespeicher 54 vorgesehen. Beide können als Energierückgewinnungseinrichtung 14 genutzt werden, um so bei dem entsprechenden Bremsvorgang in dem jeweiligen Motor 28 des Plattentransporteurs 2 bzw. der individuellen Antriebe 15 der Plattformen 6 erzeugte elektrische Energie entweder im Energiespeicher 54 zwischenzuspeichern oder über das Rückspeisemodul 53 zurück in das elektrische Netz 52 zu speisen. Beim Energiespeicher 54 kann es sich z.B. um an sich bekannte kapazitive Speicher oder Akkumulatoren handeln. Das Rückspeisemodul 53 und/oder der Energiespeicher 54 können zusätzlich zu den anhand von Fig. 18 gezeigten Energierückgewinnungseinrichtungen 14 in Form der Antriebsregler 50 realisiert sein. Es kann aber auch vorgesehen sein, dass die Antriebsregler 50 selbst nicht als Energierückgewinnungseinrichtung 14 ausgebildet sind und die Energierückgewinnungseinrichtung 14 nur in Form des Rückspeisemoduls 53 und/oder des Energiespeichers 54 ausgebildet ist.

Dies alles sind nur Beispiele, wie die beim Abbremsen von Plattformen 6 und/oder der beweglichen Teile des Plattentransporteurs 2 frei werdende Energie mittels entsprechender Energierückgewinnungseinrichtungen 14 zwischengespeichert werden kann, um so später bei einem Beschleunigungsvorgang der Plattformen 6 und/oder des Plattentransporteurs 2 oder in anderer Art und Weise genutzt werden zu können.

Explizit wird darauf hingewiesen, dass auch Motoren 28 von gemeinsamen Antrieben 16, wie sie z.B. in den Fig. 11 bis 13 gezeigt sind, entsprechend genutzt werden können, um über Antriebsregler 50, Rückspeisemodule 53 oder Energiespeicher 54 Energierückgewinnungseinrichtungen 14 zu schaffen. Vor allem ist aber auch darauf hinzuweisen, dass diese Energierückgewinnungseinrichtungen 14 nicht auf den Fall von elektrischen Antrieben beschränkt sind. Z.B. auch bei pneumatischen oder hydraulischen Antrieben des Plattentransporteurs 2 oder der Plattformen 6 kann mittels entsprechender Druckspeicher beim jeweiligen Bremsvorgang frei werdende Energie zwischengespeichert und für einen späteren Antriebsvorgang oder in anderer Art und Weise genutzt werden.

**Legende zu den Hinweisziffern:**

| | | | |
|---|---|---|---|
| 1 | Plattenlager | 28 | Motor |
| 2 | Plattentransporteur | 29 | Getriebe |
| 3 | Plattenaufnehmer | 30 | Antriebswelle |
| 4 | Platte | 31 | Führungsrolle |
| 5 | Lageretage | 32 | Anschlagpuffer |
| 6 | Plattform | 33 | Zahnrad |
| 7 | Plattformführung | 34 | Zahnstange |
| 8 | Lagerplatz | 35 | Spindel |
| 9 | Freiraum | 36 | Spindelfixierung |
| 10 | Plattenaufnehmerträger | 37 | Antriebsstange |
| 11 | Horizontale | 38 | Nocke |
| 12 | Vertikale | 39 | Schwenkgelenk |
| 13 | Ansaugvorrichtung | 40 | Nockenantrieb |
| 14 | Energierückgewinnungseinrichtung | 41 | Stangenführungsschiene |
| | | 42 | Mutter |
| 15 | individueller Antrieb | 43 | Antriebsriemen |
| 16 | gemeinsamer Antrieb | 44 | Motorwelle |
| 17 | Koppeleinrichtung | 45 | Plattenzuführbereich |
| 18 | Führungsschiene | 46 | Sägelinie |
| 19 | Laufrolle | 47 | Druckbalken |
| 20 | fixer Lagerplatz | 48 | Plattenentnahmebereich |
| 21 | Plattenzuführeinrichtung | 49 | Vorschubeinrichtung |
| 22 | Plattenabführeinrichtung | 50 | Antriebsregler |
| 23 | Plattenbearbeitungsanlage | 51 | Bremswiderstand |
| 24 | Tragstruktur | 52 | elektrischer Netzanschluss |
| 25 | Fahrschiene | 53 | Rückspeisemodul |
| 26 | Brücke | 54 | Energiespeicher |
| 27 | Pfeil | | |

## Patentansprüche

1. Plattenlager (1) mit zumindest einem Plattentransporteur (2), welcher zumindest einen in der Horizontalen (11) und in der Vertikalen (12) verfahrbaren Plattenaufnehmer (3) zum Aufnehmen, Transportieren und Ablegen von Platten (4) im Plattenlager (1) aufweist, **dadurch gekennzeichnet, dass** das Plattenlager (1) zumindest eine Lageretage (5) mit zumindest zwei Plattformen (6) dieser Lageretage (5) und zumindest einer gemeinsamen Plattformführung (7) dieser Lageretage (5) aufweist, wobei die Plattformen (6) jeweils zumindest einen Lagerplatz (8) zum darauf Lagern von einzelnen und/oder aufeinandergestapelten Platten (4) ausbilden und die Plattformen (6) an der gemeinsamen Plattformführung (7) gemeinsam und auch unabhängig voneinander horizontal verfahrbar gelagert sind, wobei die Plattformführung (7) so groß ausgebildet ist, dass, durch unterschiedliches Positionieren der Plattformen (6) an der Plattformführung (7), an voneinander verschiedenen Positionen seitlich neben den und zwischen den Plattformen (6) Freiräume (9) für ein Hindurchführen des Plattenaufnehmers (3) in einen Bereich des Plattenlagers (1) unterhalb dieser Lageretage (5) ausbildbar sind.

2. Plattenlager (1) nach Anspruch 1, **dadurch gekennzeichnet, dass** das Plattenlager (1) zwei oder mehr solche Lageretagen (5) aufweist, wobei die Lageretagen (5) übereinander angeordnet sind.

3. Plattenlager (1) nach Anspruch 2, **dadurch gekennzeichnet, dass** die Plattformen (6) voneinander verschiedener Lageretagen (5) unabhängig voneinander an der jeweiligen Plattformführung (7) der jeweiligen Lageretage (5) horizontal verfahrbar gelagert sind.

4. Plattenlager (1) nach einem der Ansprüche 1 bis 3, **dadurch gekennzeichnet, dass** der Plattentransporteur (2) einen Plattenaufnehmerträger (10) aufweist, wobei der Plattenaufnehmer (3) hängend am Plattenaufnehmerträger (10) befestigt ist und zum Aufnehmen und Ablegen der Platten (4) entlang der Vertikalen (12) vom Plattenaufnehmerträger (10) absenkbar und anhebbar ist, wobei vorzugsweise vorgesehen ist, dass der Plattenaufnehmerträger (10) im Fall von nur einer Lageretage (5) über dieser Lageretage (5) und im Falle von mehreren Lageretagen (5) über der obersten Lageretage (5) in einer oder zwei Richtungen entlang der Horizontalen (11) hin und her verfahrbar gelagert ist.

5. Plattenlager (1) nach einem der Ansprüche 1 bis 4, **dadurch gekennzeichnet, dass** der Plattenaufnehmer (3) die jeweilige Platte (4) zum Aufnehmen von oben mittels zumindest einer Ansaugvorrichtung (13) des Plattenaufnehmers (3) ansaugt.

6. Plattenlager (1) nach einem der Ansprüche 1 bis 5, **dadurch gekennzeichnet, dass** das Plattenlager (1) zumindest eine Energierückgewinnungseinrichtung (14) zur Rückgewinnung und Speicherung von Energie beim Abbremsen der Plattformen (6) und/oder des Plattentransporteurs (2) aufweist.

7. Plattenlager (1) nach einem der Ansprüche 1 bis 5, **dadurch gekennzeichnet, dass** die Plattformen (6) zum Verfahren an der gemeinsamen Plattformführung (7) und/oder der Plattentransporteur (2) elektrisch angetrieben sind und das Plattenlager (1) eine Energierückgewinnungseinrichtung (14) zur Rückgewinnung und Speicherung von elektrischer Energie beim Abbremsen der Plattformen (6) und/oder des Plattentransporteurs (2) aufweist.

8. Plattenlager (1) nach einem der Ansprüche 1 bis 7, **dadurch gekennzeichnet, dass** die Plattformen (6) zum Verfahren an der gemeinsamen Plattformführung (7) jeweils mittels eines individuellen, nur dieser jeweiligen Plattform (6) zugeordneten Antriebs (15) angetrieben sind.

9. Plattenlager (1) nach einem der Ansprüche 1 bis 7, **dadurch gekennzeichnet, dass** die Lageretage (5) oder, im Fall von mehreren Lageretagen (5), zumindest eine der Lageretagen (5) einen gemeinsamen Antrieb (16) zum Verfahren der, vorzugsweise aller, Plattformen (6) der, vorzugsweise jeweiligen, Lageretage (5) an der gemeinsamen Plattformführung (7) der, vorzugsweise jeweiligen, Lageretage (5) aufweist, wobei die Plattformen (6) jeweils eine Koppeleinrichtung (17) aufweisen, mit der sie individuell an den gemeinsamen Antrieb (16) ankoppelbar und von diesem abkoppelbar sind.

10. Plattenlager (1) nach einem der Ansprüche 1 bis 9, **dadurch gekennzeichnet, dass** die gemeinsame Plattformführung (7) der, vorzugsweise jeweiligen, Lageretage (5) zumindest zwei voneinander beabstandete und einander gegenüberliegende Führungsschienen (18) aufweist und die Plattformen (6) der, vorzugsweise jeweiligen, Lageretage (5) mit Laufrollen (19) an den Führungsschienen (18) verfahrbar gelagert sind.

11. Plattenlager (1) nach einem der Ansprüche 1 bis 10, **dadurch gekennzeichnet, dass** im Fall von einer einzigen Lageretage (5) unter dieser Lageretage (5) und im Fall von zwei oder mehr Lageretagen (5) unter der untersten Lageretage (5) zusätzliche, in ihrer Position fixe Lagerplätze (20) zum darauf Lagern von einzelnen und/oder aufeinandergestapelten Platten (4) angeordnet sind.

12. Plattenlager (1) nach einem der Ansprüche 1 bis 11, **dadurch gekennzeichnet, dass** eine Plattenzuführeinrichtung (21) zum Zuführen von Platten (4) in das Plattenlager (1) und/oder eine Plattenabführeinrichtung (22) zum Abführen von Platten (4) aus dem Plattenlager (1) und/oder eine Plattenbearbeitungsanlage (23) zum Bearbeiten von Platten (4), vorzugsweise eine Plattenaufteilanlage zum Zersägen von Platten (4), in das Plattenlager (1) integriert ist.

13. Plattenlager (1) nach Anspruch 12, **dadurch gekennzeichnet, dass** Platten (4) mittels des Plattenstransporteurs (2) von der Plattenzuführeinrichtung (21) aufnehmbar und/oder auf der Plattenabführeinrichtung (22) ablegbar und/oder auf der Plattenbearbeitungsanlage (23) ablegbar und/oder von der Plattenbearbeitungsanlage (23) aufnehmbar sind.

14. Verfahren zum Betrieb eines Plattenlagers (1) nach einem der Ansprüche 1 bis 13, **dadurch gekennzeichnet, dass** Platten (4) mittels des Plattentransporteurs (2) auf den Lagerplätzen (8) der Plattformen (6) abgelegt und/oder von diesen aufgenommen werden, wobei die Plattformen (6) zur Bereitstellung der Freiräume (9) für das Hindurchführen des Plattenaufnehmers (3) an den voneinander verschiedenen Positionen entlang der gemeinsamen Plattformführung (7) verfahren werden.

15. Verfahren nach Anspruch 14, **dadurch gekennzeichnet, dass** am Plattenaufnehmer (3) gehaltene Platten (4) durch die Freiräume (9) hindurch in den Bereich unterhalb dieser Lageretage (5) abgesenkt und/oder durch die Freiräume (9) hindurch aus dem Bereich unterhalb dieser Lageretage (5) herausgehoben werden.
